# EUROPEAN PATENT APPLICATION

(11) **EP 4 694 239 A1**
(43) Date of publication of application: **11.02.2026**
(21) Application number: 24193662.4
(22) Date of filing: 08.08.2024
(51) Int. Cl.: H04W 8/18, H04W 12/00

(54) **ESTABLISHING A PERSONALIZED IUICC OPERATING SYSTEM IN A CHIP OF A MOBILE DEVICE**

(71) Applicant: Giesecke+Devrient Mobile Security Germany GmbH, 81677 München (DE)
(72) Inventor: Huber, Ulrich, 81677 München (DE); Rösner, Martin, 81677 München (DE); Shingnapurkar, Rushikesh, 122001 Gurugram (IN)
(74) Representative: Giesecke+Devrient IP

(57) **Abstract**

A method for establishing, in a chip of a mobile device, a personalized integrated UICC operating system, iUICC operating system, which when established in said chip of said mobile device, creates in said chip an integrated UICC, iUICC, designed for hosting one or several subscriber profiles, wherein, in the chip, a chip individual or/and unique chip identifier, chip ID, is present stored in a chip ID storage area of the chip, the method **characterized by the steps:** d) (7,8,9,10,11,12) at a second chip provisioning facility (OSP), or a different entity outside the chip: based on the chip ID, generate a chip individual or/and unique operating system blob, containing a chip-individual or/and unique operating system component, which contains chip individual or/and unique personalization data (GSP); download the chip individual or/and unique operating system blob to the chip and program the operating system component to or execute it in the chip, and by the programming or executing effect establishment of a chip individual or/and unique personalized operating system in the chip.

## Description

### Field of the invention

The present invention relates to establishing a personalized operating system in a chip of a mobile device, which creates in said chip an integrated UICC, iUICC, which is designed for hosting (comprising), or hosts (comprises) one or several subscriber profiles.

### Background of the invention and prior art

Traditional Subscriber Identity Module cards, SIM cards, for operation in mobile devices, also referred to as Universal Integrated Circuit Cards, UICCs, also referred to as plug-in SIMs or plug-in UICCs, pSIMs or pUICCs, are pre-fabricated before issuance with all required data including a personalized SIM card operating system and a subscriber profile, the latter including an authentication key K and a subscriber identifier IMSI and further profile data.

SIMs / UICCs are known in diverse form factors plug-in, pSIM / pUICC, embedded SIM / UICC, eSIM / eUICC, and integrated SIM / UICC, iSIM / iUICC. The pSIM / pUICC is a hardware module pluggable to and removable from a mobile device, in general in card format. The eSIM / eUICC is a hardware module soldered into a mobile device. The iSIM / iUICC is a software SIM / UICC incorporated into a chip of the chipset of the mobile device, without having an own dedicated hardware of the SIM / UICC.

Remote SIM Provisioning, RSP, describes the procedure of downloading subscriber profiles, and possibly applications, to SIMs, also after issuance of the SIM / UICC. In general, eSIM / eUICC and iSIM / iUICC are RSP capable.

Further on, for better readability, if not worded other in cited documents, the wording xUICC (eUICC, iUICC) will be used, when referring to xSIM / xUICC.

The GSMA specification [1] GSMA SGP.22 RSP Technical Specification Version 3.0, 19th October 2022 (or briefly SGP.22), describes Remote and local SIM Provisioning by downloading of Profiles to an embedded Universal Integrated Circuit Card, eUICC, hosted in a mobile device. A mobile device, also referred to as terminal, is understood to be a device having ability to communicate in a mobile network, also referred to as wireless network or radio network or mobile communication network.

Mobile devices according to [1] SGP.22 are particularly so-called consumer devices such as Smartphones, Smartwatches and Tablet PCs with mobile network connectivity, and other computers with mobile network connectivity.

Document [2] GSMA SGP.32 eSIM loT Technical Specification Version 1.0.1, 04 July 2023 (or briefly SGP.32) describes Remote and local SIM Provisioning in an Internet-of-Things, loT, environment.

Document [3] SGP.02 - Remote Provisioning Architecture for Embedded UICC Technical Specification, Version 4.2, 07 July 2020 (or briefly SGP.02), describes Remote and local SIM provisioning in an M2M environment.

Document [4] GSMA SGP.31 eSIM loT Architecture and Requirements Version 1.0, 19 April 2022 (or briefly SGP.31), describes architecture and requirements in an loT environment as related to in [2] SGP.32.

Document [5] GSMA SGP.41 - loT Architecture and Requirements (unpublished at the date of filing the application) (or briefly SGP.41) describes architecture and requirements in an In-Factory Profile Provisioning, IFPP, environment.

Document [6] GSMA SGP.42 - Remote Provisioning Architecture for In Factory Provisioning Technical Specification (unpublished at the date of filing the application) (or briefly SGP.42) describes Remote SIM Provisioning in an In-Factory Profile Provisioning, IFPP, environment.

The GSMA specification [1] SGP.22 defines different types of security domains in an eUICC. In the Issuer Security Domain Root, ISD-R, and the eUICC Controlling Authority Security Domain, ECASD, keys, certificates and general administrative data are stored. In one or several Issuer Security Domains Profile, ISD-Ps, subscriber profiles are stored. The security domain types ISD-R, ECASD (or ICADS) and ISD-P are also applicable to iUICCs.

For an integrated UICC, iUICC, a Secure Processor dedicated to the iUICC is established in a chip of a mobile device, and an iUICC operating system and one or several subscriber profiles are stored to a non-volatile memory, NVM, in the mobile device chip. The iUICC operating system and profiles are encrypted in a chip-specific, chip-individual way, for example by encryption with an individual encryption key of the chip. Exclusively the Secure Processor dedicated to the iUICC can bring the iUICC operating system and profiles to execution. By this, a software realization of a SIM card in a mobile device chip is realized, which is bound to a particular mobile device chip.

In SIM card production, the SIM card operating system is loaded to the SIM card at a manufacturing facility, which provides of both the SIM card and the operating system.

In contrary to SIM card production, iUICC production, is distributed amongst three (or four) parties chip manufacturer CM, operating system provider OSP and mobile device manufacturer OEM. The entity of the mobile device manufacturer OEM may further be split into two sub-entities, namely a first sub-entity of the manufacturer OEM (as such) of the entire end product mobile device on the one hand, and on the other hand a second sub-entity of a module manufacturer MM of a mobile device module, in which the chip is comprised, and which is to be implemented into the end product mobile device.

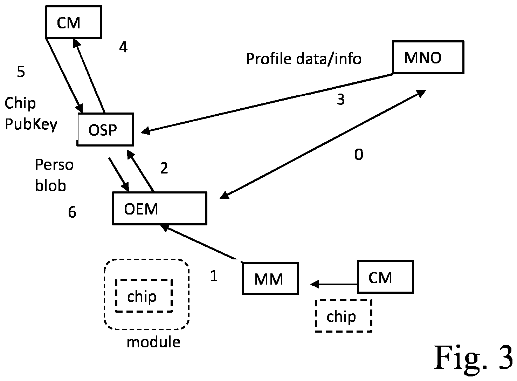

Fig. 3 shows an architecture for preparing and provisioning a personalization blob for an iUICC to be incorporated into a mobile device chip, suitable for application of the present invention.

According to Fig. 3, in a step 0, the mobile device manufacturer OEM and a mobile network operator MNO align on a contract for operating OEM devices in MNO networks. The mobile device manufacturer OEM herein makes use of a module supplied by a module manufacturer MM, and which comprises a chip supplied by a chip manufacturer CM. In a step 1, the module manufacturer MM provides to the mobile device manufacturer OEM the module comprising the chip. In a step 2, the mobile device manufacturer OEM orders, at the operating system provider OSP, the required provisioning of the chip to operate the mobile device in networks of the mobile network operator MNO with which the contract was made. In a step 3, the operating system provider OSP retrieves from the mobile network operator MNO profile data and/or information required for profile preparation. In a step 4, the operating system provider OSP retrieves from the chip manufacturer CM a public key associated to the chip and corresponding to a private key stored in the chip, and in a step 5, receives the chip public key from the chip manufacturer CM. In a step 6, the operating system provider OSP generates a chip-individual personalization blob, which comprises a personalized iUICC operating system and the required profiles, and sends the chip-individual personalization blob to the mobile device manufacturer OEM (or to the module manufacturer MM, depending on workshare amongst the mobile device manufacturer OEM and the module manufacturer MM). Finally, the mobile device manufacturer OEM (or the module manufacturer MM, depending on workshare amongst OEM and MM) programs the personalization blob into the chip, and hereby generates in the device an integrated UICC, iUICC, comprising an operating system and profiles.

Usually not single chips are personalized by the procedure depicted in Fig. 3, but batches of typically several thousands of chips. The process described in reference to Fig. 3 then requires the chip manufacturer CM to maintain a repository of chip IDs and associated chip public keys for different module manufacturers, and to handle large amounts of requests from operating system providers OSPs requesting required chip public keys for preparing personalization blobs. This procedure is logistically complex and prone to errors for the chip manufacturer CM.

In addition, profile data and/or profile information required for profile generation from a mobile network operator need to be present already when providing an iUICC operating system to the chip.

Document [7] EP4158516A1 describes a method for loading an operating system into a chip of a mobile device. Herein, a transport key is derived in a Hardware Security Module, HSM, and a chip (Secure Element) of a mobile device, from an individual PKI pair of the HSM and an individual PKI pair of the chip. Due to the derivation from the chip's PKI pair, the transport key is individual to the chip. The operating system is encrypted in the HSM with the chip-individual transport key and loaded to the chip together with the HSM public key. In the chip, the transport key is similarly derived, herein using the received HSM public key, and the operating system is decrypted and can be further processed and installed to the chip.

Document [8] EP23020256.6 describes a method for provisioning an xUICC, being a UICC of arbitrary form factor, with an operating system. Herein, an OS load key is pre-installed to the xUICC, and an operating system, xUICC unique data and profiles are encrypted with the OS load key and downloaded to the xUICC in encrypted form.

### Objective of the invention

It is an object of the present invention to provide a method for establishing a personalized operating system in a chip of a mobile device, which creates in said chip an integrated UICC, iUICC, designed for hosting (i.e. comprising), or already hosting (i.e. comprising), one or several subscriber profiles, which method reduces the logistic effort and the risk of production faults for at least some or all of the involved entities, and which offers flexibility.

### Summary of the invention

The object of the invention is achieved by an embedded system with following features, according to claim 1. Embodiments of the invention are presented in dependent claims.

In greater detail, the invention is directed to a method for establishing, in a chip of a mobile device, a personalized integrated UICC operating system, iUICC operating system, which when established in said chip of said mobile device, creates in said chip an integrated UICC, iUICC, designed for hosting (i.e. comprising), or hosting (i.e. comprising), one or several subscriber profiles.

In the chip, a chip individual or/and unique chip identifier, chip ID, is present stored in a chip ID storage area of the chip. The chip identifier is at least chip individual, or unique within an UICC/eUICC/iUICC infrastructure, which applies to the procedure, however need not be globally unique irrespective of any UICC/eUICC/iUICC infrastructure. Similarly, the operating system component mentioned in the following may be either chip individual, or unique within an UICC/eUICC/iUICC infrastructure, which applies to the procedure. Uniqueness, however, need not be global uniqueness irrespective of any UICC/eUICC/iUICC infrastructure.

### The method is characterized by the steps:

d) at a second chip provisioning facility (which may be either the first or a different facility), or a different entity outside the chip: based on the chip ID, generate a chip individual or/and unique operating system blob, containing a chip-individual or/and unique operating system component, which comprises chip individual or/and unique personalization data (GSP); download the chip individual or/and unique operating system blob to the chip and program the operating system component to or execute it in the chip, and by the programming or executing effect establishment of a chip individual or/and unique personalized operating system in the chip.

The invention has following advantages.

By making use of a chip individual or/and unique operating system blob, which contains a chip-individual or/and unique operating system component, and downloading said chip individual or/and unique operating system blob to the chip and programming the operating system component to or executing it in the chip, a chip individual or/and unique personalized operating system is established. Since the operating system blob is chip individual or/and unique, providing the correct operating system to the correct chip is facilitated, and the risk of production faults by downloading an operating system blob to a wrong chip is reduced.

Some embodiments of the invention provide additional advantages.

According to a first group of embodiments, the chip individual or/and unique operating system blob is embodied as a personalization blob, which comprises, as the operating system component, personalization data for personalizing a generic, non-personalized iUICC operating system, and wherein the downloading of the operating system comprises a separate downloading of a generic, non-personalized iUICC operating system on the one hand, and of personalization data on the other hand.

In detail, the method according the first group of embodiments further comprises, before step d), the steps:
b) load a generic, non-personalized iUICC operating system from a first chip provisioning facility to the chip, and install the generic, non-personalized iUICC operating system in the chip;
c) in reply to the installing, or/and to the loading, of the generic, non-ersonalized iUICC operating system, output the chip ID from the chip to the first chip provisioning facility, or to a different entity outside the chip;
and wherein step d) is performed as:
d) at a second chip provisioning facility, or a different entity outside the chip: based on the chip ID, generate said chip individual or/and unique personalization blob, download said chip individual or/and unique personalization blob to the chip and program said chip individual or/and unique personalization data to the chip or execute it in the chip, and by the programming or executing in the chip, effect personalization of the already installed generic, non-personalized iUICC operating, and hereby establish in the chip a chip individual or/and unique personalized iUICC operating system.

The first group of embodiments has the additional advantages:
For step b), loading a generic, non-personalized iUICC operating system from a first chip provisioning facility, like a mobile device manufacturer or module manufacturer, to the chip, and install the generic, non-personalized iUICC operating system in the chip, no chip-individual information like a chip ID is required yet, and all chips of a batch of several or several thousands of chips can be provisioned with an identical generic, non-personalized iUICC operating system. In addition, for step b), the chip manufacturer is not required to be involved, however the first chip provisioning facility can load and install the generic, non-personalized iUICC operating system autonomously from the chip manufacturer. Accordingly, the logistic burden for the chip manufacturer, and the risk of erroneously providing other chip IDs than the chip IDs of the programmed chips, are reduced.

The loading, or at latest the installing, of the generic, non-personalized iUICC operating system will initiate the chip to output its chip ID, corresponding to step c), in reply to the installing, or/and to the loading, of the generic iUICC operating system, output the chip ID from the chip to the first chip provisioning facility, or to a different entity outside the chip. Correspondingly, also for retrieving the chip ID for further steps, it is not required to involve the chip manufacturer, however the chip outputs its chip ID itself. Accordingly, the logistic burden for the chip manufacturer, and the risk of erroneously providing other chip IDs than the chip IDs of the personalized chips, are reduced.

In the end, a generic iUICC operating system identical for all chips is not sufficient, however each chip is desired to have an individually personalized iUICC operating system.

According to the invention as embodied in the first group of embodiments, this is achieved by step d), at a second chip provisioning facility, or a different entity outside the chip: based on the chip ID, generate said chip individual or/and unique personalization blob, download said chip individual or/and unique personalization blob to the chip and program said chip individual or/and unique personalization data contained in the blob to the chip or execute it in the chip, and by the programming or executing effect personalization of the generic, non-personalized iUICC operating system, and hereby establish in the chip a chip individual or/and unique personalized iUICC operating system.

The chip ID required for step d) may be provided from the first chip provisioning facility to the second chip provisioning facility. Correspondingly, the invention allows flexibility in time, due to keeping the chips generic until a late time in the production process.

According to a second group of embodiments, the operating system blob is embodied as a pre-personalized operating system blob, which contains, as the operating system component, a pre-personalized iUICC operating system which has been generated and personalized outside the chip, with chip individual or/and unique personalization data. Accordingly, the method can be worked with one single operating system downloading step only to establish a personalized chip individual or/and unique iUICC operating system in the chip. The second group of embodiments has the additional advantage of low complexity of the process, further reducing a risk of production faults.

In the following, further embodiments will be described.

According to some embodiments of the method, step c) further comprises:
After installing the generic, non-personalized iUICC operating system, output an installation result notification, indicative of a result of the installation, from the chip ID to the first chip provisioning facility, or to the different entity outside the chip, wherein the chip ID is output in, or in connection with, the installation result notification.

The installation result notification may particularly be embodied as a Profile Installation Result Notification according to [1] SGP.22 or [4] SGP.31 or a similar specification.

According to some embodiments of the method, the chip-individual or/and unique operating system component of step d) comprises iUICC individual data which are individual to the iUICC.

Particularly, according to some embodiments, the iUICC individual data comprise one or several or all of the following:
- an iUICC identifier, EID, of the iUICC;
- an iUICC private key, for creating digital signatures, for example the private key SK.EUICC.SIG according to [1] SGP.22 or [4] SGP.31;
- iUICC public key corresponding to the iUICC private key, for example the public PK.EUICC.SIG according to [1] SGP.22 or [4] SGP.31;
- an iUICC Certificate for iUICC authentication containing the iUICC public key, for example the certificate CERT.EUICC.SIG according to [1] SGP.22 or [4] SGP.31 containing the public PK.EUICC.SIG according to [1] SGP.22 or [4] SGP.31;
- an eSIM Certificate Issuer (CI) RootCA Public Key for verifying certificates of an entity outside the iUICC, for example the certificate PK.CI.SIG according to [1] SGP.22 or [4] SGP.31;
- a Certificate Revocation List, for example CRL according to [1] SGP.22 or [4] SGP.31;
- one or several optional certificates, in particular optional certificates according to [1] SGP.22 or [4] SGP.31.

According to some embodiments, the iUICC comprises an Issuer Security Domain Root, ISD-R, and an iUICC Controlling Authority Security Domain, ECASD, wherein, when the chip-individual or/and unique operating system blob is downloaded to the chip and the operating system component is programmed to or executed in the chip, at least some or all of the iUICC individual data are stored to the ISD-R or/and to the ECASD.

According to some embodiments, the operating system blob and module further comprises subscriber profile data, which, when the operating system blob is downloaded to the chip and the operating system component is programmed to or executed in the chip, effects generation of one or several Issuer Security Domains Profile, ISD-Ps, and/or subscriber profiles established in Issuer Security Domains Profile, ISD-Ps, in the chip.

According to some embodiments, the first chip provisioning facility is a provisioning facility operated by a manufacturer of mobile devices, or by a manufacturer of modules destined for mobile devices.

According to some embodiments, the second chip provisioning facility is a provisioning facility operated by operating system provider, and in particular a chip provisioning facility different from the first chip provisioning facility. Alternatively, the second chip provisioning facility is identical to the first chip provisioning facility.

According to some embodiments:
- in the chip, a public-private key pair comprising a chip public key and a chip private key is present, stored in a key storage area of the chip;
- step d) generating the chip individual or/and unique operating system blob based on the output chip ID comprises: retrieve, based on the output chip ID, the chip public key from an entity outside the chip, and encrypt the operating system component, particularly either the personalized operating system or the personalization data, based on the chip public key. Herein, the encrypt may either be encrypt the operating system component directly with the chip public key, or alternatively encrypt the operating system component with a key derived based on the chip public key. In any case, the result of the encrypting is the chip individual or/and unique operating system blob.

In that the operating system component is encrypted with the chip public key, which is chip-individual, or with an also chip-individual key derived from said chip-individual chip public key, the operating system component is brought into a chip-individual form and can be decrypted only by the correct chip any more.

According to some embodiments, step d) comprises, as encrypt the operating system component based on the chip public key: derive a symmetric code encryption key, based on the chip public key and a private key of the second chip provisioning facility, or a different entity outside the chip, and encrypt the operating system contents with the derived symmetric code encryption key. Particularly, the symmetric code encryption key may be derived by a key derivation mechanism from a chip public key and an external entities private key, or from a chip private key and an external entity's public key, like DH or ECDH or ECIES.

The method according to some embodiments further comprises, before step b), a preparatory step:
a) (1, 2) provide a chip; the chip comprising a chip ID; and in case of claim 11 or 12, the chip comprising a public-private key pair comprising a chip public key and a chip private key present stored in a key storage area of the chip, or generating such a public-private key pair in the chip, or injecting such a public-private key pair into the chip.

According to some embodiments, the chip public key is stored in the chip in a certificate.

According to some embodiments, the personalization data are embodied as a personalization script which when executed upon the non-personalized iUICC operating system effects personalization of the non-personalized iUICC operating system. Such embodiments apply to embodiments wherein the personalized operating system is established in the chip in two steps, in a first step establishing a non-personalized iUICC operating system, and in a second step personalizing the non-personalized iUICC operating system within the chip.

According to some embodiments, the personalization data are embodied as a result of executing a personalization script upon a non-personalized iUICC operating system. Such embodiments apply to embodiments wherein the personalized operating system is established in the chip in a single step, wherein the personalized version of iUICC operating system is prepared already outside the chip, and the personalized iUICC operating system is loaded and installed into the chip in a single step.

### Brief description of the drawings

Embodiments of the invention will now be described with reference to the accompanying drawings, throughout which like parts are referred to by like references, and in which represents:
- Fig. 1: a procedure of establishing a personalized operating system in a chip, comprising loading and installing a generic operating system, and then personalizing the generic operating system, according to embodiments of the invention;
- Fig. 2: a procedure of personalizing a chip, according to embodiments of the invention;
- Fig. 3: an architecture for preparing and provisioning a personalization blob for an iUICC to be incorporated into a mobile device chip, suitable for application of the invention.

### Detailed description of the invention

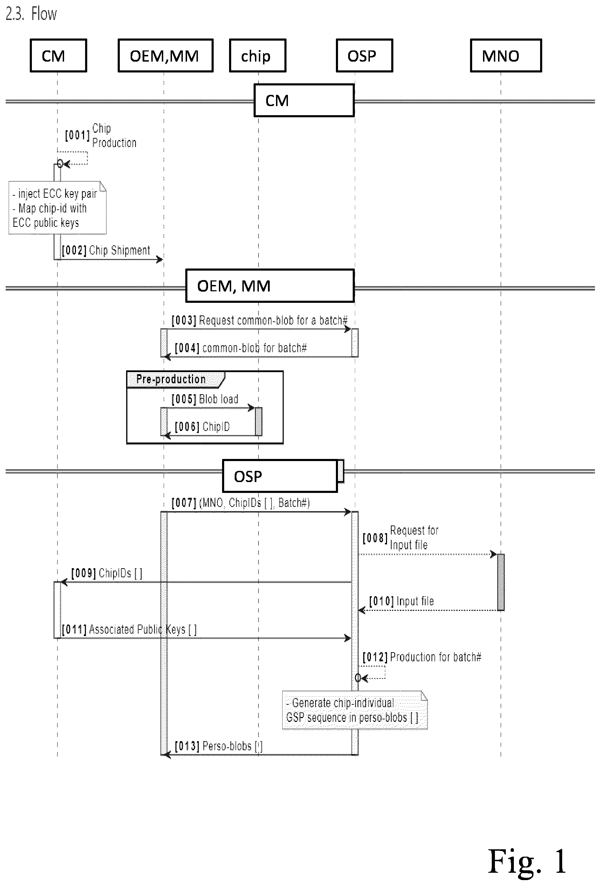

Fig. 1 shows a procedure of establishing a personalized operating system in a chip, comprising loading and installing a generic operating system, and then personalizing the generic operating system, according to embodiments of the invention, corresponding to the first group of embodiments employing a two-step procedure.

At a chip production facility CM, at a chip manufacturer CM, in a step [001], for each chip of a batch of chips, an ECC key pair (ECC: Elliptic Curve Cryptography), comprising an ECC public key and an ECC private key, as an example of a public-private key pair, is injected into the chip. The chip contains a chip ID. The chip ID is mapped with the ECC public key. In a step [002], the batch of chips is shipped to a chip provisioning facility MM/OEM, which may be hosted by a module manufacturer MM or by an Original Equipment Manufacturer OEM (device manufacturer).

At a chip provisioning facility MM/OEM, in a step [003], a request for a generic, non-personalized iUICC operating system (the non-personalized iUICC operating system being contained in a data structure depicted as "common-blob") is sent from said chip provisioning facility MM/OEM to an operating system provider OSP, for the batch of chips.

Said chip provisioning facility MM/OEM may be a module manufacturer MM or a device manufacturer OEM. In a step [004], the operating system provider OSP, in reply to step [003], sends to the chip provisioning facility MM/OEM the requested generic, non-personalized iUICC operating system (the non-personalized iUICC operating system being contained in a data structure depicted as "common-blob"), dedicated for each chip of the batch of chips. At the chip provisioning facility MM/OEM, in a step [005], the generic, non-personalized iUICC operating system (contained in a data structure depicted as "common-blob"), is loaded and programmed into each chip of the batch of chips. In reply, in a step [006], each chip of the batch of chips outputs its individual chip ID to the chip provisioning facility MM/OEM. In a step [007], the chip provisioning facility MM/OEM sends the output chip IDs of the chips of the batch of chips to the operating system provider OSP.

At the operating system provider OSP, in continuation of step [007], the chip IDs of the chips of the batch of chips are received from the chip provisioning facility MM/OEM. In a step [008], the operating system provider OSP sends to a Mobile Network Operator MNO a request for input files, which may contain subscription profiles and/or applications, herein preferably at least one subscription profile. In a step [010], the Mobile Network Operator MNO sends to the operating system provider OSP the requested input files. In a step [009], which may be in parallel, after or before step [008], the operating system provider OSP sends to the chip manufacturer CM a request for the ECC public keys of the chips of the batch of chips, accompanied by the chip IDs received from the chip provisioning facility MM/OEM. The chip manufacturer CM receives the request with the chip IDs, retrieves the ECC public keys associated to the chips of the batch of chips, and, in a step [011] sends the retrieved ECC public keys of the chips of the batch of chips to the operating system provider OSP.

In a step [012], the operating system provider OSP starts production of chip-individual personalization data for each of the chips of the batch of chips, in order to personalize the generic operating system of each single chip individually and differently. In the embodiment of Fig. 1, the personalization data are embodied as a personalization sequence GSP, such as a personalization script.

The chip individual personalization data may comprise one or several or all of the following:
- an iUICC identifier, EID, of the iUICC;
- an iUICC private key (SK.EUICC.SIG) for creating digital signatures;
- iUICC public key (PK.EUICC.SIG) corresponding to the iUICC private key;
- an iUICC Certificate for iUICC authentication (CERT.EUICC.SIG) containing the iUICC public key (PK.EUICC.SIG);
- an eSIM Certificate Issuer (CI) RootCA Public Key (PK.CI.SIG) for verifying certificates of an entity outside the iUICC;
- a Certificate Revocation List (CRL);
- one or several optional certificates.

In addition, particularly, the chip individual personalization data may already comprise the profiles and/or applications from the input file received from the Mobile Network Operator MNO in step [010].

Further at the operating system provider OSP, and in continuation of step [012], the personalization sequence GSP or personalization script is packaged into a data structure blob, in detail a personalization blob (since the content of the blob is personalization data) that can be loaded into the chip.

In a step [013], the operating system provider OSP sends the generated chip-individual personalization blobs of the chips of the batch of chips to the chip provisioning facility MM/OEM.

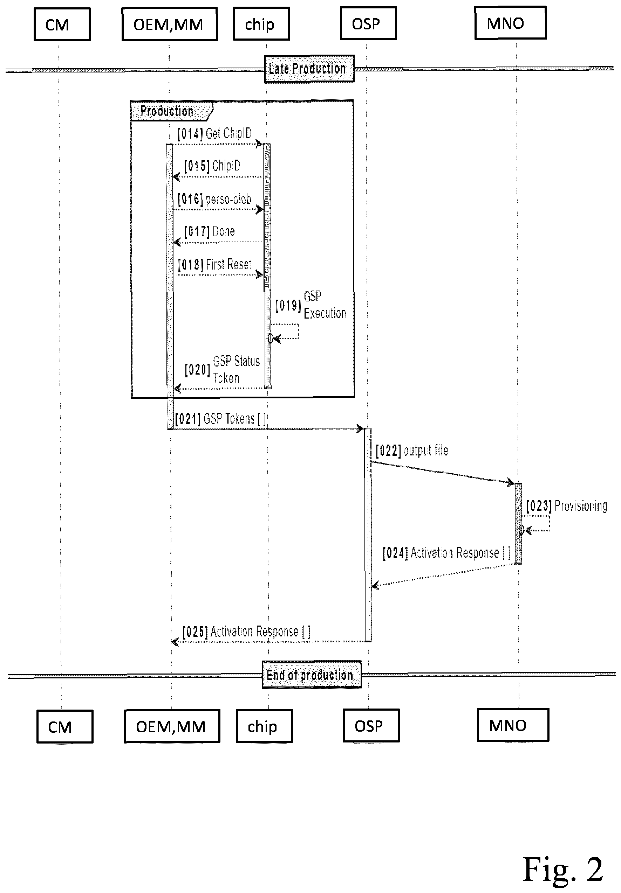

Fig. 2 shows a procedure of personalizing a chip, according to embodiments of the invention, in continuation of the procedure of Fig. 1.

In continuation of step [013], the chip provisioning facility MM/OEM receives from the operating system provider OSP the generated chip-individual personalization blobs of the (destined for the) chips of the batch of chips.

In a step [014], the chip provisioning facility MM/OEM reads out the chip IDs from the chips of the batch of chips, for example by a command "Get Chip ID". In reply, in a step [015], the respective chip outputs its chip ID to the chip provisioning facility MM/OEM.

In a step [016], the chip provisioning facility MM/OEM selects, for each chip of the batch of chips, the correct chip-individual personalization blob, corresponding to the chip ID, and sends the selected chip-individual personalization blob to the correct chip, corresponding to the chip ID. The chip receives the chip-individual personalization blob. In a step [017], the chip replies to the chip provisioning facility MM/OEM that the personalization blob has successfully been received in the chip ("Done").

In a step following the successful loading of the personalization blob, step [018], the chip provisioning facility MM/OEM sends to the chip a Reset command to reset the chip for the first time after the successful loading of the personalization blob into the chip.

In reaction to receiving the first Reset command, in a step [019], the chip processes the personalization blob, particularly extracts the personalization sequence (personalization script) GSP from the personalization blob, and programs the personalization data corresponding to the personalization sequence / script into the chip, or executes the personalization sequence / script to program the personalization data into the generic operating system in the chip, as required according to the detailed nature and architecture of the personalization sequence / script.

By programing the personalization data, or executing the personalization sequence / script and the programing the personalization data, the formerly generic operating system is personalized and made chip-individual.

In a step [020], for each chip of the batch of chips, the chip outputs to, and the chip provisioning facility MM/OEM receives form the chip, a GSP Status Token, indicating successful programing of the personalization data.

In a step [021], the chip provisioning facility MM/OEM sends the GSP Status Tokens received from the chips of the batch of chips to the operating system provider OSP.

In a step [022], the operating system provider OSP creates an output file containing the GSP Status Tokens of all the chips of the batch of chips and sends the output file to the Mobile Network Operator MNO.

In a step [023], the Mobile Network Operator MNO receives output file and extracts and reviews the GSP Status Tokens of all the chips of the batch of chips.

In a step [024], the Mobile Network Operator MNO sends to the operating system provider OSP an Activation Response for some or all of the chips of the batch of chips, for which it has received a GSP Status Token indicating successful personalization of the chip.

In a step [025], the operating system provider OSP forwards the Activation Responses received from the Mobile Network Operator MNO to the chip provisioning facility MM/OEM.

In case the GSP Status Token indicates that the chip operating system is successfully personalized and activated, the GSP Status Token is a notification only.

In case the GSP Status Token indicates that the chip operating system is successfully personalized and not yet activated, the GSP Status Token is trigger, upon which the chip provisioning facility MM/OEM sends to the respective chip an activation command to activate the personalized operating system.

Fig. 3 shows an architecture for preparing and provisioning a personalization blob for an iUICC to be incorporated into a mobile device chip, suitable for application of the invention.

### Cited documents

[1] [SGP.22] GSMA SGP.22 RSP Technical Specification Version 3.0, 19th October 2022
[2] [SGP.32] GSMA SGP.32 eSIM loT Technical Specification Version 1.0.1, 04 July 2023
[3] [SGP.02] SGP.02 - Remote Provisioning Architecture for Embedded UICC Technical Specification, Version 4.2, 07 July 2020
[4] [SGP.31] GSMA SGP.31 eSIM loT Architecture and Requirements Version 1.0, 19 April 2022
[5] [SGP.41] GSMA SGP.41 - loT Architecture and Requirements (unpublished at the date of filing the application)
[6] [SGP.42] GSMA SGP.42 - Remote Provisioning Architecture for In Factory Provisioning Technical Specification (unpublished at the date of filing the application)
[7] EP4158516A1
[8] EP23020256.6

## Claims

1. A method for establishing, in a chip of a mobile device, a personalized integrated UICC operating system, iUICC operating system, which when established in said chip of said mobile device, creates in said chip an integrated UICC, iUICC, designed for hosting, or hosting, one or several subscriber profiles, wherein, in the chip, a chip individual or/and unique chip identifier, chip ID, is present stored in a chip ID storage area of the chip,
the method **characterized by the steps:**
d) (7,8,9,10,11,12) at a second chip provisioning facility (OSP), or a different entity outside the chip: based on the chip ID, generate a chip individual or/and unique operating system blob, containing a chip-individual or/and unique operating system component, which contains chip individual or/and unique personalization data (GSP); download the chip individual or/and unique operating system blob to the chip and program the operating system component to or execute the operating system component in the chip, and by the programming or executing effect establishment of a chip individual or/and unique personalized operating system in the chip.

2. The method according to claim 1, wherein the chip individual or/and unique operating system blob is embodied as a personalization blob (GSP), which comprises, as the operating system component, chip individual or/and unique personalization data for personalizing a generic, non-personalized iUICC operating system, and wherein the method further comprises, before step d), the steps:
b) (3, 4, 5) load a generic, non-personalized iUICC operating system from a first chip provisioning facility (OEM; MM) to the chip, and install the generic, non-personalized iUICC operating system in the chip;
c) (6) in reply to the installing, or/and to the loading, of the generic, non-personalized iUICC operating system, output the chip ID from the chip to the first chip provisioning facility (OEM; MM), or to a different entity outside the chip;
and wherein step d) is performed as:
d) (7,8,9,10,11,12) at a second chip provisioning facility (OSP), or a different entity outside the chip: based on the chip ID, generate said chip individual or/and unique personalization blob (GSP), download said chip individual or/and unique personalization data (GSP) to the chip and program said chip individual or/and unique personalization data (GSP) to the chip or execute the operating system component in the chip, and by the programming or executing effect personalization of the generic, non-personalized iUICC operating, and hereby establish in the chip a chip individual or/and unique personalized iUICC operating system.

3. The method according to claim 1, wherein the operating system blob is embodied as a pre-personalized operating system blob, which contains, as the operating system component, a pre-personalized iUICC operating system which has been generated and pre-personalized with chip individual or/and unique personalization data (GSP) outside the chip.

4. The method according to any of claims 1 to 3, wherein step c) further comprises:
after installing the generic, non-personalized iUICC operating system, output an installation result notification, indicative of a result of the installation, from the chip ID to the first chip provisioning facility (OEM; MM), or to the different entity outside the chip,
wherein the chip ID is output in, or in connection with, the installation result notification.

5. The method according to any of claims 1 to 4, wherein the chip-individual or/and unique operating system component of step d) comprises iUICC individual data which are individual to the iUICC.

6. The method according to claim 5, wherein the iUICC individual data comprise one or several or all of the following:
- an iUICC identifier, EID, of the iUICC;
- an iUICC private key (SK.EUICC.SIG) for creating digital signatures;
- iUICC public key (PK.EUICC.SIG) corresponding to the iUICC private key;
- an iUICC Certificate for iUICC authentication (CERT.EUICC.SIG) containing the iUICC public key (PK.EUICC.SIG);
- an eSIM Certificate Issuer (CI) RootCA Public Key (PK.Cl.SIG) for verifying certificates of an entity outside the iUICC;
- a Certificate Revocation List (CRL);
- one or several optional certificates.

7. The method according to any of claims 1 to 6, wherein the iUICC comprises an Issuer Security Domain Root, ISD-R, and an iUICC Controlling Authority Security Domain, ECASD, and wherein, when the chip-individual or/and unique operating system blob is downloaded to the chip and the operating system component is programmed to or executed in the chip, at least some or all of the iUICC individual data are stored to the ISD-R or/and to the ECASD.

8. The method according to any of claims 1 to 7, wherein the operating system blob and operating system component further comprises subscriber profile data, which, when the operating system blob is downloaded to the chip and the operating system component is programmed to or executed in the chip, effects generation of one or several Issuer Security Domains Profile, ISD-Ps, and/or subscriber profiles established in Issuer Security Domains Profile, ISD-Ps, in the chip.

9. The method according to any of claims 1 to 8, wherein the first chip provisioning facility (OEM; MM) is a provisioning facility operated by a manufacturer (OEM) of mobile devices, or by a manufacturer (MM) of modules destined for mobile devices.

10. The method according to any of claims 1 to 9, wherein the second chip provisioning facility (OSP) is a provisioning facility operated by operating system provider (OSP), or alternatively the first chip provisioning facility (OEM; MM).

11. The method according to any of claims 1 to 10, wherein:
- in the chip, a public-private key pair comprising a chip public key and a chip private key is present, stored in a key storage area of the chip;
- step d) generating the chip individual or/and unique operating system blob based on the output chip ID comprises: retrieve, based on the output chip ID, the chip public key from an entity outside the chip, and encrypt the operating system component, particularly either the personalized operating system or the personalization data, based on the chip public key, namely either encrypt the operating system component directly with the chip public key, or encrypt the operating system component with a key derived based on the chip public key, wherein the result of the encrypting is the chip individual or/and unique operating system blob.

12. The method according to claim 11, wherein step d) comprises, as encrypt the operating system component based on the chip public key: derive a symmetric code encryption key, based on the chip public key and a private key of the second chip provisioning facility (OSP), or a different entity outside the chip, and encrypt the operating system contents with the derived symmetric code encryption key.

13. The method according to any of claims 1 to 12, further comprising, before step b), a preparatory step:
a) (1, 2) provide a chip; the chip comprising a chip ID; and in case of claim 11 or 12, the chip comprising a public-private key pair comprising a chip public key and a chip private key present stored in a key storage area of the chip, or generating such a public-private key pair in the chip, or injecting such a public-private key pair into the chip.

14. The method according to claim 13, wherein the chip public key is stored in the chip in a certificate.

15. The method according to any of claims 1 to 14, wherein the personalization data are embodied as a personalization script (GSP) which when executed upon the generic, non-personalized iUICC operating system effects personalization of the generic, non-personalized iUICC operating system, or as result of executing a personalization script (GSP) upon a generic, non-personalized iUICC operating system.
